# EUROPEAN PATENT SPECIFICATION

(11) **EP 0 826 584 B1**
(45) Date of publication and mention of the grant of the patent: **23.04.2003**
(21) Application number: 97112295.7
(22) Date of filing: 17.07.1997
(51) Int. Cl.: B62K 11/04

(54) **Body frame structure of motorcycle**
Motorrad-Rahmenstruktur
Structure de cadre pour motocyclette

(30) Priority: 30.08.1996 JP 23114696
(43) Date of publication of application: 04.03.1998
(73) Proprietor: HONDA GIKEN KOGYO KABUSHIKI KAISHA, Minato-ku Tokyo (JP)
(72) Inventor: Henda, Naoki, 1-4, Chuo 1-chome, Wako-shi, Saitama-ken (JP); Tsukiji, Kensuke, 1-4, Chuo 1-chome, Wako-shi, Saitama-ken (JP); Matsuno, Toshio, 1-4, Chuo 1-chome, Wako-shi, Saitama-ken (JP); Yamaguchi, Ken, 1-4, Chuo 1-chome, Wako-shi, Saitama-ken (JP)
(74) Representative: Liska, Horst, Dr.-Ing.

(56) References cited:
- EP-A- 0 765 800
- GB-A- 498 696
- JP-U- 58 161 779
- PATENT ABSTRACTS OF JAPAN vol. 016, no. 135 (M-1230), 6 April 1992 (1992-04-06) & JP 03 295782 A (SUZUKI MOTOR CORP), 26 December 1991 (1991-12-26) & JP 03 295782 A (SUZUKI) 26 December 1991 (1991-12-26)

## Description

The present invention relates to a body frame structure of a motorcycle.

Body frame structures of motorcycles have been disclosed, for example, in Japanese Utility Model Laid-open No. Sho 58-161779 titled "Body Frame Used for Motorcycle and the Like".

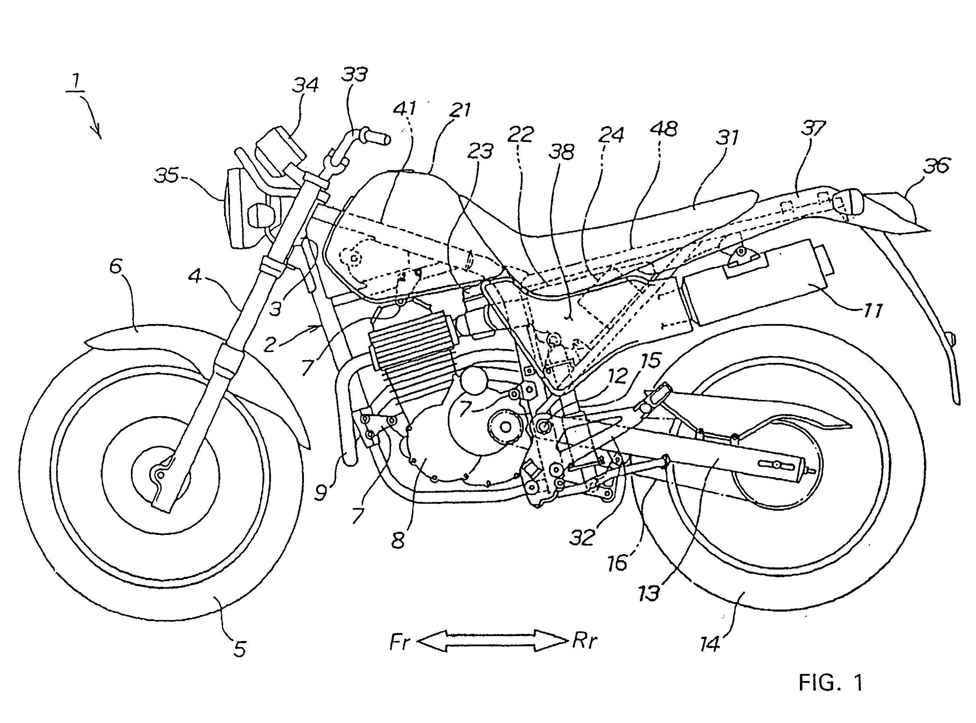

The above technique regarding a so-called semi-double cradle type body frame will be briefly described with reference to Fig. 1 of the document. In the following description, reference numerals of parts are cited from the document. A top tube 2 extends rearward from a steering head 1 and forked seat pillar tubes 5 extend downward from a rear portion of the top tube 2. A front down tube 3 extends downward from the steering head 1 and forked lower tubes 7 extend rearward from a lower portion of the front down tube 3. The seat pillar tubes 5 are joined to the lower tubes 7. Swing arm shaft supporting members 8 are mounted to the connection portion where the seat pillar tubes 5 are joined to the lower tubes 7. A rear wheel swing arm 12 is rotatably mounted to the swing arm shaft supporting members 8.

The above-described related art semi-double cradle type body frame, however, has a complicated structure.

To simplify the semi-double cradle type body frame structure, a single cradle type body frame has been proposed. Such cradle is known from EP-A-0 765 800 which discloses a body frame structure of a motorcycle which is of a single cradle type, the body frame structure including: a main pipe extending rearward from a head pipe; a center pipe extending downward from a rear portion of the main pipe; a down tube extending downward from the head pipe; and a lower pipe extending rearward from a lower portion of the down tube, a lower portion of the lower pipe being joined to a lower portion of the center pipe; wherein each of the main pipe, the center pipe, the down tube, and the lower pipe is formed of a square pipe.

The single cradle type body frame, however, requires brackets extending sideward of the body, etc. for mounting a rear wheel swing arm formed in a forked shape in a plan view to one center pipe extending along the longitudinal center line of the body, thereby complicating the structure of the mounting portion.

An object of the present invention is to provide a single cradle type body frame capable of mounting a rear wheel swing arm with a simple structure.

To achieve the above object, according to the invention described in claim 1, there is provided a body frame structure of a motorcycle, characterized in that a lateral width of the center pipe is larger than that of the main pipe while a lateral width of the lower pipe is larger than that of the down tube.

The first feature described above, in which the lateral width of the center pipe is made larger, simplifies the structures of a supporting bracket for mounting a swing arm and of its neighborhood because the length of a portion of the supporting bracket projecting from the center pipe becomes shorter. As a result, the mounting structure of the swing arm is simplified.

The second feature in which the lateral width of the main pipe is smaller than that of the center pipe makes it possible to reduce a dead space in a bottom portion of a fuel tank laid across the main pipe and hence to ensure a sufficient capacity of the fuel tank.

The third feature in which the lateral width of the down tube is smaller than that of the lower pipe simplifies the layout of exhaust pipes extending from the engine around the down tube.

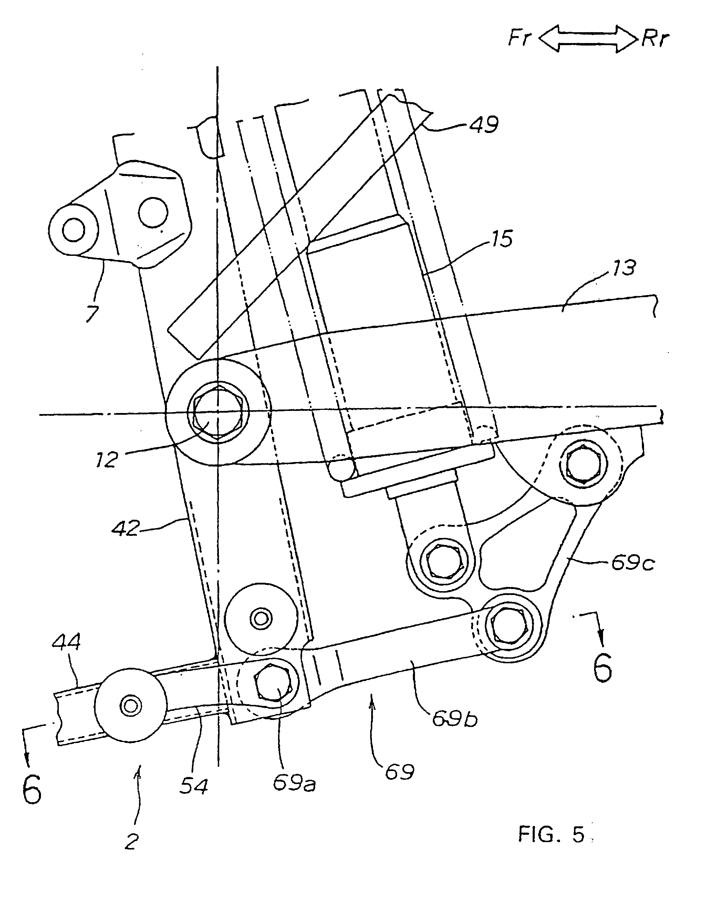

Hereinafter, an embodiment of the present invention will be described with reference to the accompanying drawings. In the drawings, front and rear, right and left, and upper and lower sides are given on the basis of the rider's eyes; and characters Fr, Rr, L, and R indicate front, rear, left, and right sides, respectively. In addition, the drawings should be viewed in the orientation of characters.
Fig. 1
   is a side view of a motorcycle according to the present invention.
Fig. 2
   is a side view of a body frame of the motorcycle according to the present invention.
Fig. 3
   is a plan view of the body frame of the motorcycle according to the present invention.
Fig. 4
   is a front view of the body frame of the motorcycle according to the present invention.
Fig. 5
   is a side view of a joint portion of a center pipe to a lower pipe according to the present invention.
Fig. 6
   is a sectional view taken on line 6-6 of Fig. 5.
Figs. 7(a) and 7(b)
   are configuration views of the body frame of the motorcycle according to the present invention, illustrating the function of the body frame.
Figs. 8(a) and 8(b)
   are configuration views of the joint portion between a main pipe and the center pipe according to the present invention, illustrating the function of the joint portion.
Figs. 9(a), 9(b) and 9(c)
   are configuration views of the joint portion between a down tube and the lower pipe according to the present invention, illustrating the function of the joint portion.
Fig. 10
   is an exploded view in perspective of the swing arm and its neighborhood according to the present invention.
Fig. 11
   is a configuration view of mounting portions of the brackets with steps according to the present invention.

Referring to Fig. 1, there will be shown a motorcycle 1 having a cradle type body frame 2. The body frame 2 has a head pipe 3 to which a front fork 4 is mounted. A front wheel 4 and a front fender 6 are mounted to the front fork 4. A four cycle engine 8 is mounted, by means of a plurality of engine hangers 7, in a space surrounded by pipes of the body frame 2. An exhaust pipe 9 extends from the engine 8 and is connected to a silencer 11. A swing arm 13 is mounted to a rear end portion of the body frame 2 through a pivot 12. A rear wheel 14 is mounted to the swing arm 13.

In Fig. 1, reference numeral 15 indicates a rear suspension mounted to the rear portion of the body frame 2; 16 is a drive chain; 21 is a fuel tank laid across a main pipe 41 of the body frame 2; 22 is an air cleaner; 23 is a carburetor; and 24 is a battery.

Reference numeral 31 indicates a seat; 32 is a bracket with steps; 33 is a steering handlebar; 34 is a meter; 35 is a head lamp; 36 is a tail lamp; 37 is a rear fender; and 38 is a side cover.

Fig. 2 is a side view of the body frame of the motorcycle according to the present invention.

The body frame 2 is of a single cradle type. The main pipe 41 extends rearward from the head pipe 3 and a center pipe 42 extends downward from a rear portion of the main pipe 41. A down tube 43 extends downward from the head pipe 3 and a lower pipe 44 extends rearward from a lower portion of the down tube 43. A rear portion of the lower pipe 44 is joined to a lower portion of the center pipe 42. Each of the main pipe 41, center pipe 42, down tube 43, and lower pipe 44 is formed of a square pipe.

The body frame 2 has a relatively flexible structure. A reinforcing pipe 45 is provided only at the upper portion of the body frame 2 in a state being hung between the main pipe 41 and the down tube 43, and no reinforcing member is provided under the reinforcing pipe 45.

The head pipe 3, main pipe 41, down tube 43, and reinforcing pipe 45 are reinforced by a front gusset 46. The main pipe 41 and the reinforcing pipe 45 are reinforced by a rear gusset 47.

The center pipe 42 extends curvedly, downward from the rear portion of the main pipe 41, and a seat rail 48 extending rearward is joined to a curved upper portion of the center pipe 42. The seat pipe 48 is formed of a square pipe.

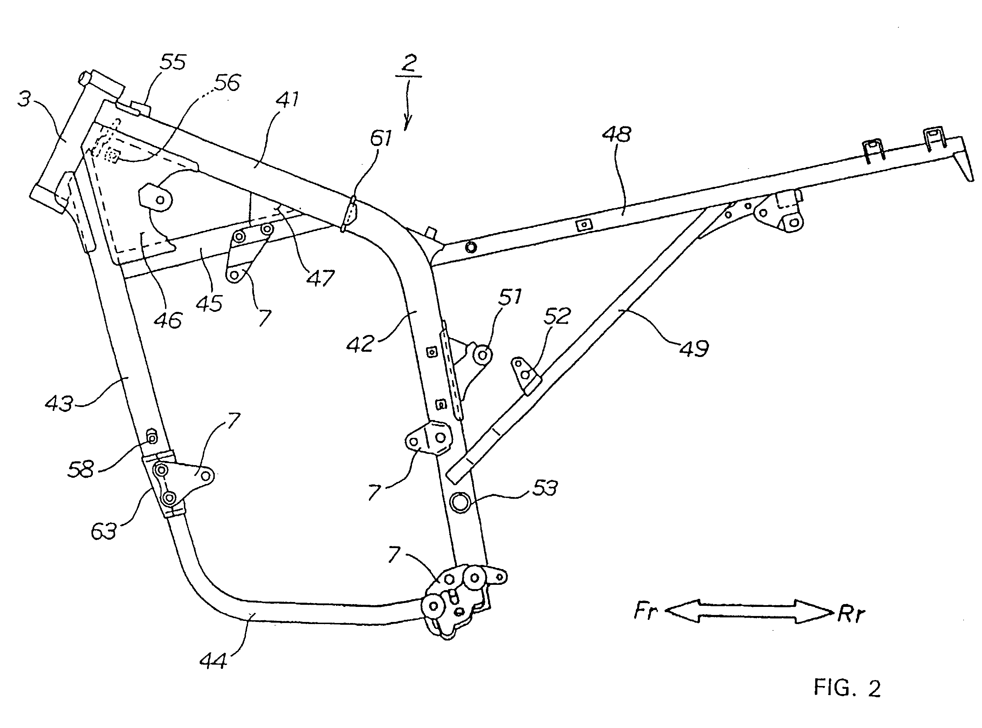

In Fig. 2, reference numerals 49, 49 (only one is shown in the figure) indicate a pair of right and left subframes extending upward, rearward from the center pipe 42 for supporting an approximately intermediate portion of the seat rail 48. Reference numeral 51 indicates a hanger for hanging the rear suspension; 52 is a bracket for mounting the air cleaner; 53 is a pipe-like supporting bracket for supporting the swing arm 13 (see Fig. 1); 55 is an oil level detecting port; and 56 is an oil feed port.

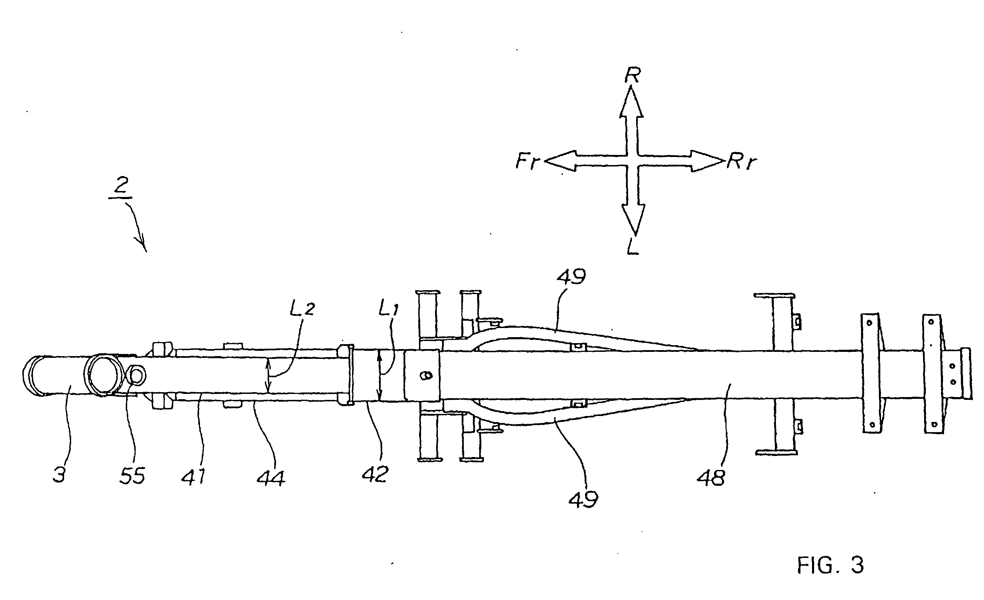

Fig. 3 is a plan view of the body frame of the motorcycle according to the present invention, showing that the head pipe 3, main pipe 41, center pipe 42, down tube 43 (see Fig. 2), lower pipe 44, and seat rail 48 pass through the longitudinal center line of the body.

A lateral width (width in the direction from right R to left L) L₁ of the center pipe 42 is larger than a lateral width L₂ of the main pipe 41.

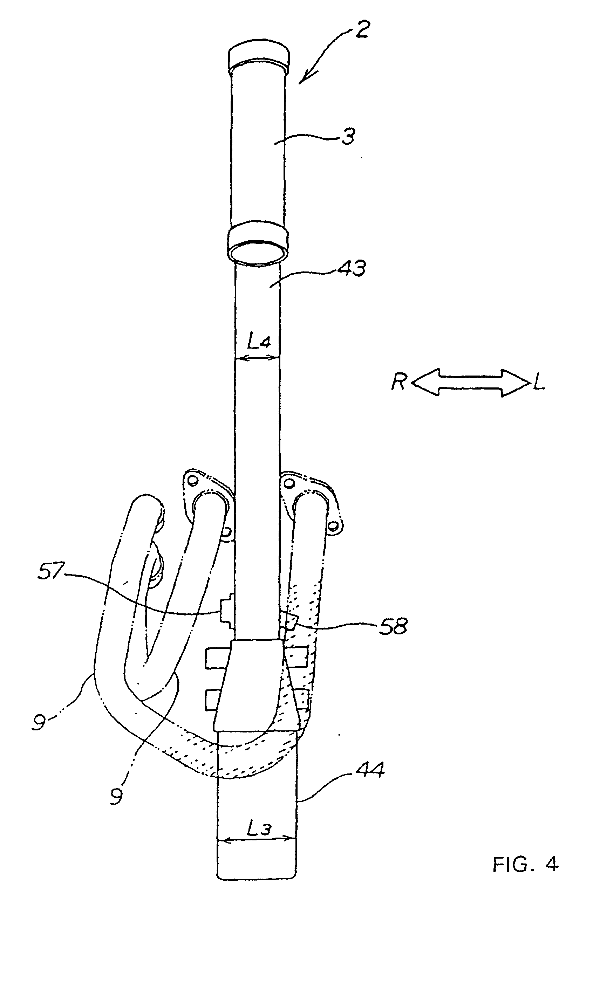

Fig. 4 is a front view of the body frame of the motorcycle according to the present invention. A lateral width (width in the direction from right R to left L) L₃ of the lower pipe 44 is larger than a lateral width L₄ of the down tube 43.

Since the lateral width L₄ of the down tube 43 is not so larger as compared with the lower pipe 44, it is possible to simplify the layout of the exhaust pipes 9 extending from the engine around the down tube 43.

In addition, reference numeral 57 indicates an oil ejection port, and 58 is an oil drain port.

Fig. 5 is a side view of the joint portion between the center pipe and the lower pipe according to the present invention. The rear portion of the lower pipe 44 is joined to the lower portion of the center pipe 42.

Specifically, the rear end of the lower pipe 44 of the body frame 2 is butt-welded to an outer wall surface of the lower portion of the center pipe 42 of the body frame 2. Plate-like reinforcing members 54 are each welded to one side surface of the center pipe 42 and to one side surface of the lower pipe 44 for reinforcing the joint portion between the center pipe 42 to the lower pipe 44. The center pipe 42 is thus strongly joined to the lower pipe 44.

The swing arm 13 is connected to the rear suspension 15 through a link mechanism 69. The link mechanism 69 is composed of a first link 69b and a second link 69c. The first link 69b is vertically rotatably mounted to the lower portion of the center pipe 42 through a pivot 69a. The second link 69c connects three points, that is, a leading end of the first link 69b, the swing arm 13, and a leading end of a rod of the rear suspension 15 to each other.

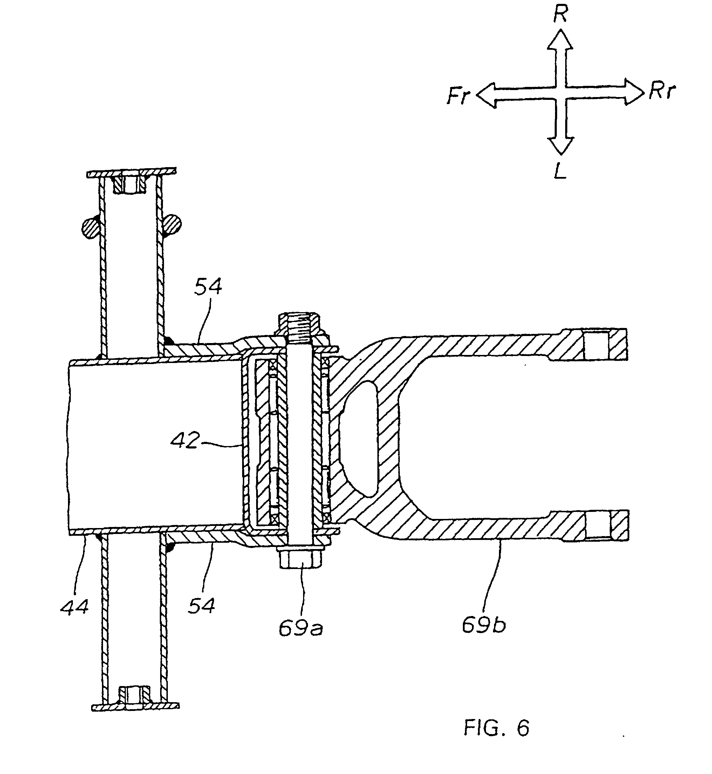

Fig. 6 is a sectional view taken on line 6-6 of Fig. 5, showing a state in which the reinforcing members 54 are each joined to one side surface of the center pipe 42 and to one side surface of the lower pipe 44.

In addition, the first link 69b is formed in a forked-shape in a plan view.

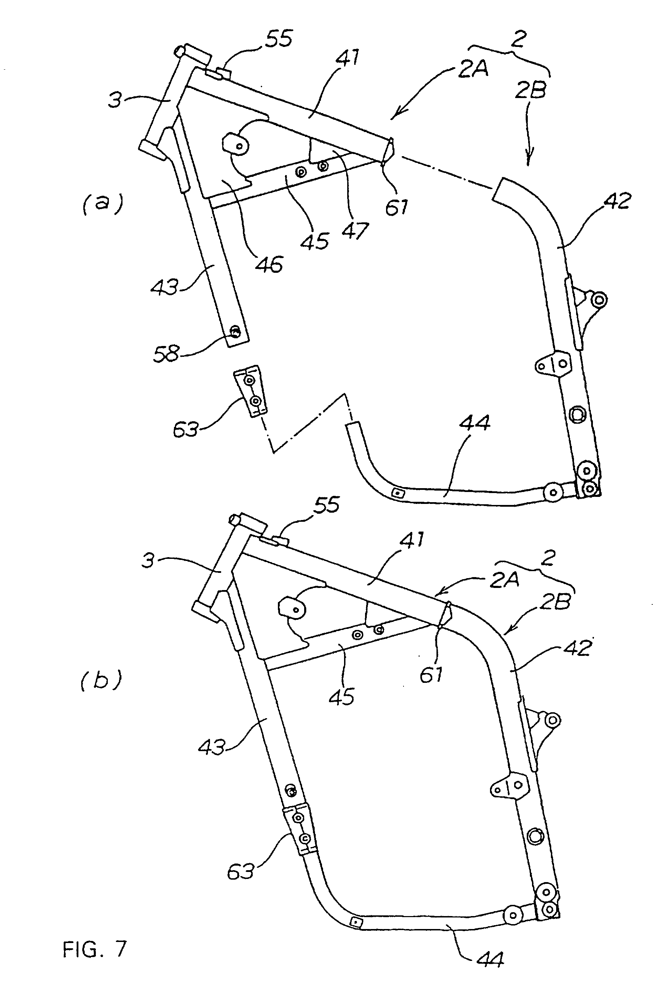

Figs. 7(a), 7(b) are configuration views of the body frame of the motorcycle according to the present invention, illustrating the function of the body frame, wherein Fig. 7(a) shows a disassembling state of the body frame, and Fig. 7(b) shows an assembling state of the body frame.

The body frame 2 is composed of a front half 2A and a rear half 2B. The front half 2A is composed of the head pipe 3, main pipe 41, down tube 43, and reinforcing pipe 45. The rear half 2B is composed of the center pipe 42 and the lower pipe 44. The front half 2A is integrated with the rear half 2B by welding. The interior of the front half 2A is used as an oil tank which serves as an oil pan of the engine 8 (see Fig. 1).

Specifically, in the front half 2A, the interiors of the main pipe 41, down tube 43, and reinforcing pipe 45, and a space in the front gusset 46 are communicated to each other, to form the oil tank.

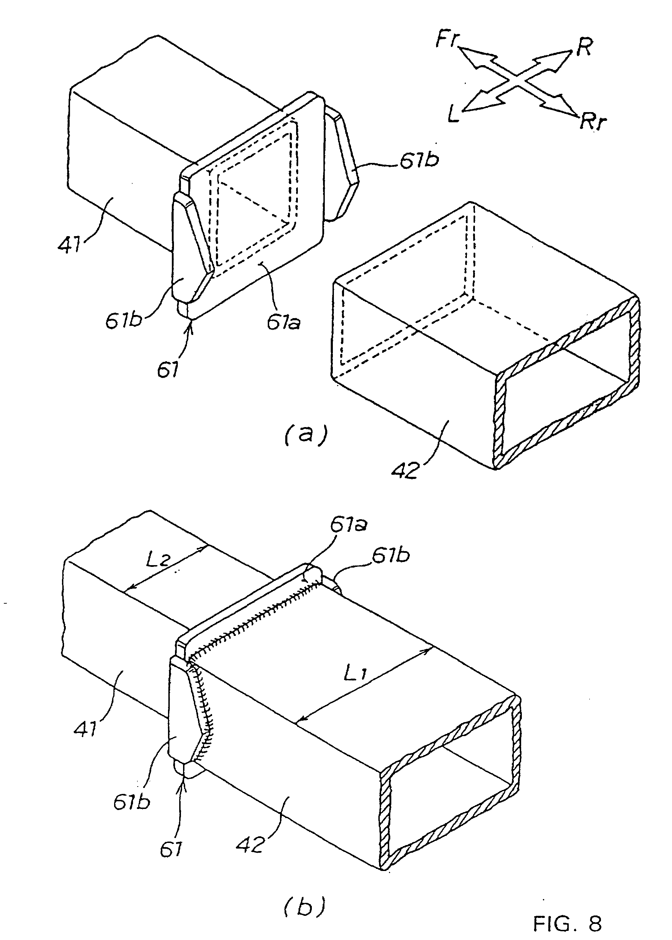

Figs. 8(a), 8(b) are configuration views of the joint portion between the main pipe and the center pipe according to the present invention, illustrating the function of the joint portion, wherein Fig. 8(a) shows a disassembling state of the joint portion, and Fig. 8(b) shows an assembling state of the joint portion.

The joint portion is characterized in that the main pipe 41 is joined by welding to the center pipe 42 through a blind plate 61.

Specifically, as shown in Fig. 8(a), the rear end portion of the main pipe 41 is blocked with the blind plate 61. An opposed surface 61a of the blind plate 61 is joined to the center pipe 42, as shown in Fig. 8(b). An outer size of the blind plate 61 is quite larger than an outer size of the center pipe 42. The blind plate 61 has return portions 61b, 61b formed at right and left end portions thereof in such a manner as to extend along the wall surfaces of the center pipe 42. Thus the center pipe 42 is joined by welding to the opposed surface 61a and the return portions 61b, 61b.

The thickness of the blind plate 61 is set at a value large enough not to exert adverse effect on an oil seal of the main pipe 41 when the center pipe 42 is welded to the blind plate 61. Specifically, the thickness of the blind plate 61 is set at a value larger than a wall thickness of the main pipe 41. For example, for the main pipe 41 having a wall thickness of 2 mm, the thickness of the blind plate 61 is set at 4 mm. In this case, even when there occurs a weld defect such as pinholes at the weld between the center pipe 42 and the blind plate 61, it is possible to prevent oil leakage from the main pile 41.

Moreover, since the main pipe 41 is not directly joined to the center pipe 42, the wall thickness of the main pipe 41 is not required to be made larger for ensuring sufficient welding without occurrence of oil leakage due to a weld defect such as pinholes.

In this way, the blind plate 61 serves not only as a lid for blocking the rear portion of the main pipe 41 but also as a bracket for joining the main pipe 41 to the center pipe 42.

Even when the sizes of the main pipe 41 and the center pipe 42 are changed, the blind plate 61 can easily serve as both the lid and bracket only by changing the shape and size thereof. Additionally, the blind plate 61 can be easily joined to the main pipe 41 or the center pipe 42.

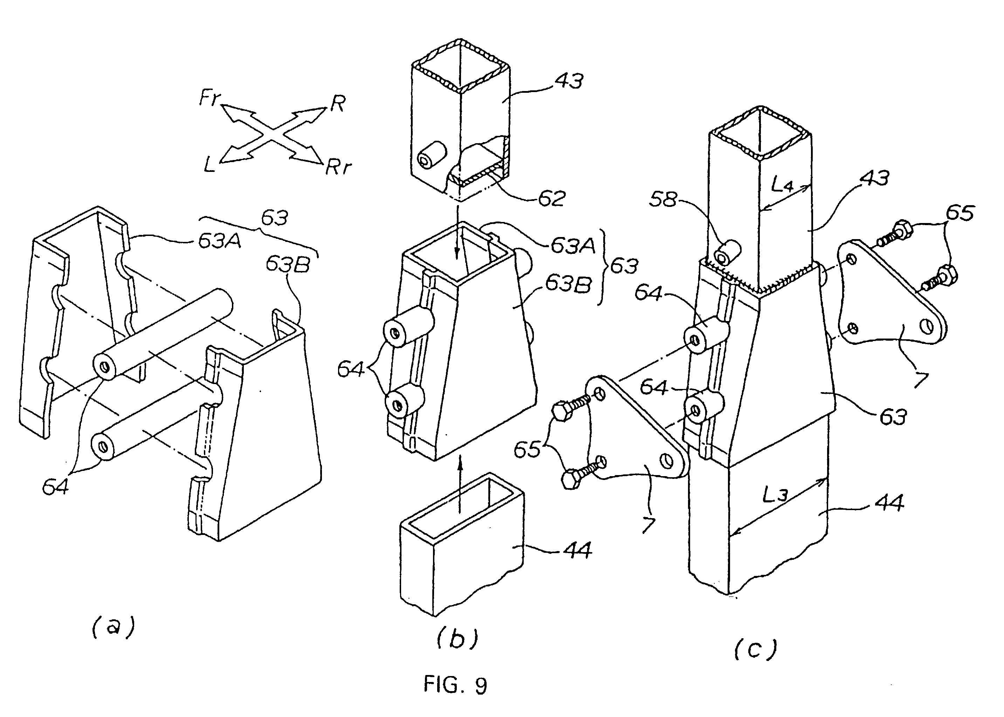

Figs. 9(a), 9(b), and 9(c) are configuration views of the joint portion between the down tube and the lower pipe according to the present invention, illustrating the function of the joint portion, wherein Fig. 9(a) shows a disassembling state of a joint member; Fig. 9(b) shows an intermediate state of the assembly of the joint member; and Fig. 9(c) shows an assembling state of the joint member.

The lower end portion of the down tube 43 is blocked with a blind plate 62 as shown in Fig. 9(b), and the down tube 43 is joined by welding to the lower pipe 44 through a joint member 63 as shown in Fig. 9(c).

Specifically, as shown in Fig. 9(a), the joint member 63 is a square pipe composed of longitudinally two-divided halves (front half 63A and rear half 63B). Then, as shown in Fig. 9(c), the down tube 43 and the lower pipe 44, which are different in size, are inserted in opposed end portions of the joint member 63, and joined thereto by peripheral welding. The down tube 43 and the lower pipe 44, which are different in size, can be freely connected to each other through the joint member 63 only by changing the shape of the joint member 63.

In addition, pipe-like bosses 64, to which the engine hangers 7 are mounted with bolts 65, are mounted to the joint member 63.

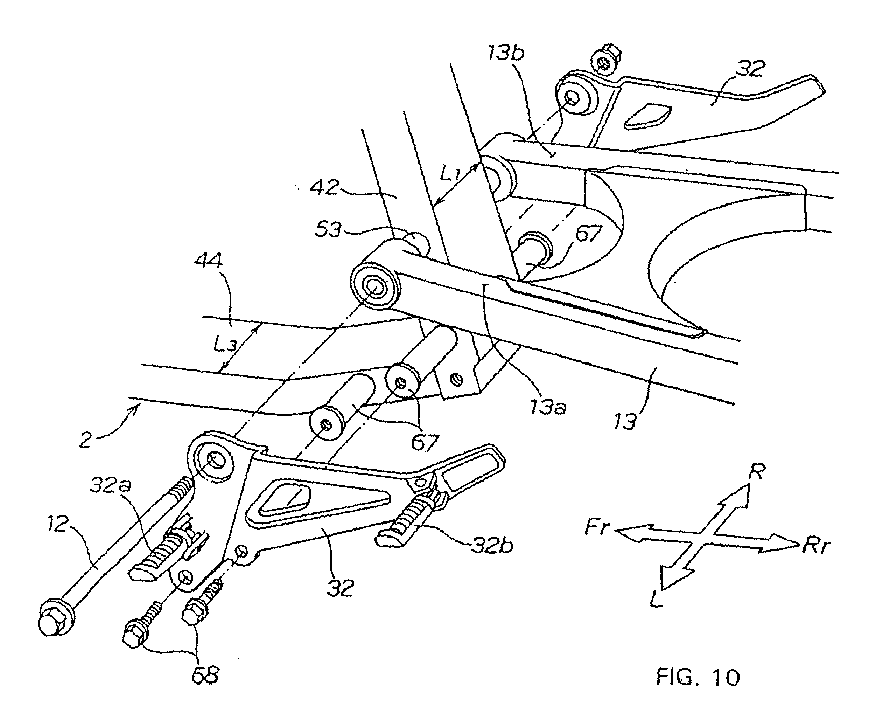

Fig. 10 is an exploded view in perspective of the swing arm and its neighborhood according to the present invention. The swing arm 13 formed in a forked shape in a plan view is laid across the center pipe 42 provided along the center line of the body, and it is vertically rotatably supported by the pivot 12 composed of a bolt passing through the swing arm 13 and the center pipe 42.

The bracket 32 with steps has a rider's step 32a and a fellow's step 32b. Three points of bracket 32 are mounted to the body frame 2. Of these three mounting points of the bracket 32, one is mounted to the body frame 2 through the pivot 12. Specifically, such a point of the bracket 32 is co-fastened to the center pipe 42 together with right and left arm portions 13a, 13b of the swing arm 13 by means of the pivot 12, and the remaining two points of the bracket 32 are mounted to the pipe-like bosses 67 extending from the body frame 2 with bolts 68. Since one point of the bracket 32 is mounted to the body frame 2 using the pivot 12 as described above, it is possible to reduce the number of the mounting parts and to simplify the mounting work thereof.

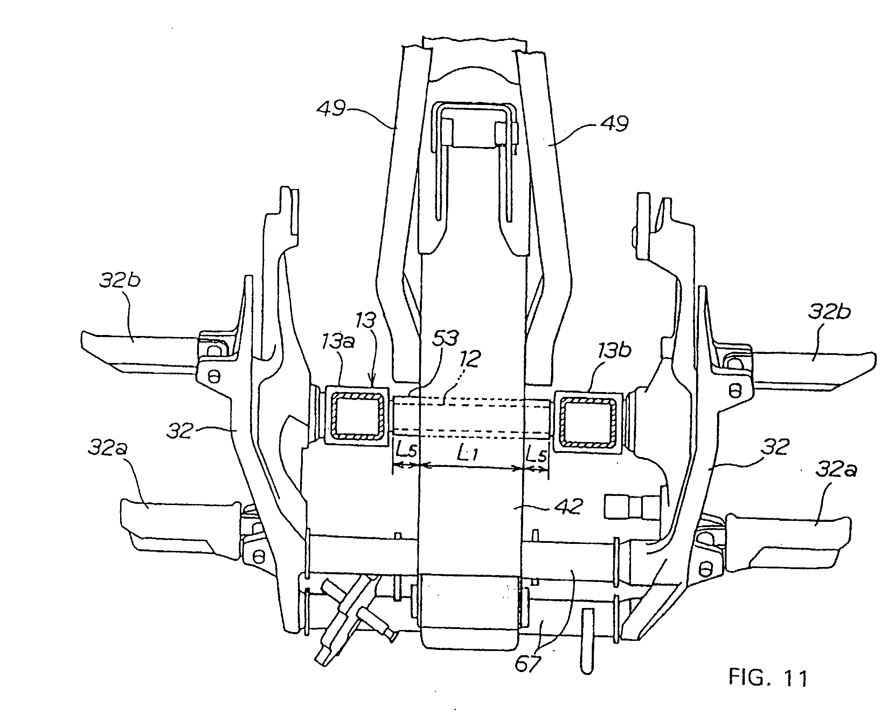

Fig. 11 is a configuration view, seen from the rear side, of mounting portions of the brackets with steps according to the present invention. Each of the right and left brackets 32 is mounted by means of the pivot 12 to the center pipe 42 together with the right and left arm portions 13a, 13b of the swing arm 13.

The supporting bracket 53 projects a length L₅ from each of the right and left side surfaces of the center pipe 42.

Next, a procedure for joining the front half 2A and the rear half 2B of the body frame 2 to each other will be described with reference to Figs. 7(a) to 9(c). It is to be noted that the joining procedure is only for an easy understanding of the configuration of the present invention, and it is not exclusive.
(1) The front half 2A and the rear half 2B of the body frame 2 are separately prepared, as shown in Fig. 7(a). In this case, the rear end portion of the main pipe 41 is blocked with the blind plate 61 by welding as shown in Fig. 8(a), and the lower end portion of the down tube 43 is blocked with the blind plate 62 by welding as shown in Fig. 9(b).
(2) The interior of the front half 2A shown in Fig. 7(a) is subjected to leak test, such as airtight test performed by applying an air pressure into the interior of the front half 2A.
(3) The front half 2A is joined to the rear half 2B as shown in Fig. 7(b), to obtain the body frame 2.
(4) Concretely, as shown in Fig. 8(b), the main pipe 41 is jointed to the center pipe 42 by welding the center pipe 42 to the blind plate 61. Beside, as shown in Fig. 9(a) to 9(c), the down tube 43 is jointed to the lower pipe 44 through the joint member 63.

A procedure of joining the down tube 43 to the lower pipe 44 will be described with reference to Figs. 9(a) to 9(c).
(1) The front half 63A and the rear half 63B are butted to each other while putting the pipe-like bosses 64 therebetween, and are joined to each other by welding, to obtain the joint member 63.
(2) The lower end portion of the down tube 43 and the upper end of the lower pipe 44 are inserted into the upper and lower portions of the joint member 63 respectively and joined to each other by welding, as shown in Fig. 9(b). As a result, the down tube 43 is joined to the lower pipe 44 through the joint member 63, as shown in Fig. 9(c).
(3) After that, the engine hangers 7 are mounted to the bosses 64 with the bolts 65. The mounting work is thus completed.

Incidentally, since the pipe-like bosses 64 is fixedly held between the front half 63A and the rear half 63B, they can be mounted to the body frame 2 without provision of boss mounting holes in the down tube 43 and the lower pipe 44.

This makes it possible to simplify the mounting work for the bosses 64, and hence to reduce the number of the mounting steps and the mounting cost.

The function of the body frame 2 will be described with reference to Fig. 11.

Since the lateral width L₁ of the center pipe 42 is made larger, the projecting length L₅ of the supporting bracket 53 from the center pipe 42 becomes sufficiently short. As a result, an outer diameter of a cantilever portion of the supporting bracket 53 can be reduced, so that the structure (being mainly composed of the supporting bracket 53) for mounting the swing arm 13 to the center pipe 42 is simplified and miniaturized.

Although the joining configuration of the down tube 43 to the lower pipe 44 is performed through the joint member 63 in this embodiment, the present invention is not limited thereto. For example, like the joining configuration between the main pipe 41 and the center pipe 42, the down tube 43 can be joined to the lower pipe 44 through a blind plate having a large thickness (larger than the thickness of each of the down tube 43 and the lower pipe 44), with the same function and effect.

A body frame 2 of a single cradle type is provided. A main pipe 41 extends rearward from a head pipe 3 and a center pipe 42 extends downward from a rear portion of the main pipe 41. A down tube 43 extends downward from the head pipe 3 and a lower pipe 44 extends rearward from a lower portion of the down tube 43. A rear portion of the lower pipe 44 is joined to a lower portion of the center pipe 42. Each of the main pipe 41, center pipe 42, down tube 43, and lower pipe 44 is formed of a square pipe. In this body frame 2, a lateral width of the center pipe 42 is larger than that of the main pipe 41, and a lateral width of the lower pipe 44 is larger than the down tube 43.

Since the lateral width of the center pipe is made larger, the structures of a supporting bracket for mounting a swing arm and of its neighborhood is simplified because the length of a portion of the supporting bracket projecting from the center pipe becomes shorter. As a result, the mounting structure of the swing arm is simplified.

## Claims

1. A body frame structure of a motorcycle, which is of a single cradle type, said body frame structure comprising:
a main pipe (41) extending rearward from a head pipe (3);
a center pipe (42) extending downward from a rear portion of said main pipe (41);
a down tube (43) extending downward from said head pipe (3); and
a lower pipe (44) extending rearward from a lower portion of said down tube (43), a lower portion of said lower pipe (44) being joined to a lower portion of said center pipe (42);
**characterized in that**
each of said main pipe (41), said center pipe (42), said down tube (43), and said lower pipe (44) is formed of a square pipe; and a lateral width (L₁) of said center pipe (42) is larger than the width (L₂) of said main pipe (41) while a lateral width (L₃) of said lower pipe (44) is larger than the width (L₄) of said down tube (43).

## Patentansprüche

1. Hauptrahmenstruktur eines Kraftrads, das von einer Einschleifen-Bauart ist, wobei die Hauptrahmenstruktur umfasst:
ein Hauptrohr (41), das sich von einem Kopfrohr (3) nach hinten erstreckt;
ein Mittelrohr (42), das sich von einem hinteren Abschnitt des Hauptrohrs (41) nach unten erstreckt;
ein Abwärtsrohr (43), das sich von dem Kopfrohr (3) nach unten erstreckt; und
ein unteres Rohr (44), das sich von einem unteren Abschnitt des Abwärtsrohrs (43) nach hinten erstreckt, wobei ein unterer Abschnitt des unteren Rohrs (44) mit einem unteren Abschnitt des Mittelrohrs (42) verbunden ist;
**dadurch gekennzeichnet, dass** jedes des Hauptrohrs (41), des Mittelrohrs (42), des Abwärtsrohrs (43) und des unteren Rohrs (44) aus einem Vierkantrohr geformt ist; und eine Querbreite (L1) des Mittelrohrs (42) größer ist als die Breite (L2) des Hauptrohrs (41), während eine Querbreite (L3) des unteren Rohrs (44) größer ist als die Breite (L4) des Abwärtsrohrs (43).

## Revendications

1. Structure formant ossature d'une motocyclette, qui est d'un type à cadre unique, ladite structure formant ossature comportant :
un tube principal (41) s'étendant vers l'arrière à partir d'un tube de tête (3),
un tube central (42) s'étendant vers le bas à partir d'une partie arrière dudit tube principal (41),
un tube descendant (43) s'étendant vers le bas à partir dudit tube de tête (3), et
un tube inférieur (44) s'étendant vers l'arrière à partir d'une partie inférieure dudit tube descendant (43), une partie inférieure dudit tube inférieur (44) étant reliée à une partie inférieure dudit tube central (42),
**caractérisée en ce que** chacun parmi ledit tube principal (41), ledit tube central (42), ledit tube descendant (43) et ledit tube inférieur (44) est formé d'un tube carré, et une largeur latérale (L₁) dudit tube central (42) est plus grande que la largeur (L₂) dudit tube principal (41), tandis qu'une largeur latérale (L₃) dudit tube inférieur (44) est plus grande que la largeur (L₄) dudit tube descendant (43).
